# EUROPÄISCHE PATENTSCHRIFT

(11) **EP 3 954 964 B1**
(45) Veröffentlichungstag und Bekanntmachung des Hinweises auf die Patenterteilung: **23.11.2022**
(21) Anmeldenummer: 21187017.5
(22) Anmeldetag: 21.07.2021
(51) Int. Cl.: F41H 13/00, F41G 7/22

(54) **DIRCM MIT AUTARKER ÜBERSCHNEIDUNGSFREIER ÜBERGABE ZWISCHEN MODULEN**
DIRCM WITH INDEPENDENT OVERLAP-FREE TRANSFER BETWEEN MODULES
DIRCM À TRANSFERT AUTONOME SANS CHEVAUCHEMENT ENTRE LES MODULES

(30) Priorität: 14.08.2020 DE 102020004949
(43) Veröffentlichungstag der Anmeldung: 16.02.2022
(73) Patentinhaber: Diehl Defence GmbH & Co. KG, 88662 Überlingen (DE)
(72) Erfinder: von Mirbach, Andreas, 91217 Hersbruck (DE); Dresel, Klaus, 91575 Windsbach (DE)
(74) Vertreter: Diehl Patentabteilung

(56) Entgegenhaltungen:
- EP-A1- 3 699 544
- EP-A1- 3 751 226
- EP-B1- 3 081 895
- WO-A1-2019/077572
- CA-A1- 3 094 039

## Beschreibung

Die Erfindung betrifft DIRCMs (Directed Infrared Counter Measures) bzw. entsprechende DIRCM-Systeme und deren DIRCM-Module.

Aus "https://www.diehl.com/ defence/ de /presse-und-medien/ themen-im-fokus/, 'Laser soll Transportflugzeuge der Bundeswehr schützen', Abruf am 04.02.2019" ist ein laserbasiertes DIRCM (Directed Infrared Counter Measure)-System zum Schutz taktischer Transportflugzeuge, anderer Flugzeugmuster oder von Hubschraubern vor Raketenangriffen bzw. modernen Lenkflugkörpern bekannt. Das Schutzsystem verwendet Hightech-Sensoren des Herstellers Elbit Systems, um Suchkopf-gesteuerte Lenkflugkörper abwehren zu können. Solche Flugkörper, eingesetzt von tragbaren Luftabwehrsystemen, stellen besonders bei Start und Landung eine große Gefahr dar. Diehl Defence integriert drei der bereits im Einsatz bewährten J-MUSIC (Multi-Spectral Infrared Countermeasure) - Lasergeräte von Elbit zu einem erweiterten Gesamtsystem, um einen kompletten 360°-Rundumschutz für das Flugzeug zu gewährleisten. Das neue DIRCM-System arbeitet in Verbindung mit dem bord-eigenen Flugkörperwarner und fokussiert den hochdynamisch und präzise geführten Laserstrahl direkt auf den Infrarot-Suchkopf des angreifenden Objekts.

Aus der EP 3 081 895 B1 ist ein Verfahren zum Betrieb eines DIRCM-Systems zum Schutz einer Plattform gegen IR-geführte Raketen bekannt, wobei das DIRCM-System eine Vielzahl von DIRCM-Subsystemen umfasst, die zum Verfolgen und Stören von IR-geführte Raketen betreibbar sind; und wobei die DIRCM-Subsysteme ein erstes DIRCM-Subsystem und ein zweites DIRCM-Subsystem umfassen, die auf der Plattform so installiert sind, dass: das erste DIRCM-Subsystem betreibbar ist, um IR-geführte Raketen in einem ersten Abdeckungsbereich zu verfolgen und zu stören; das zweite DIRCM-Subsystem betreibbar ist, um IR-geführte Raketen in einem zweiten Abdeckungsbereich zu verfolgen und zu stören; und sowohl das erste als auch das zweite DIRCM-Subsystem betreibbar sind, um IR-geführte Raketen in einem Überlappungsbereich zu verfolgen und zu stören, der einen an den ersten Abdeckungsbereich angrenzenden ersten Übergabe-Unterabschnitt und einen an den zweiten Abdeckungsbereich angrenzenden zweiten Übergabe-Unterabschnitt umfasst. Das Verfahren beinhaltet eine Überlapp-Operation und eine Übergabe-Operation.

Aufgabe der Erfindung ist es, Verbesserungen bei DIRCMs anzugeben.

Die Aufgabe wird gelöst durch ein Verfahren gemäß Patentanspruch 1 zur Übergabe eines anfliegenden Ziels während der Bekämpfung des Ziels, wobei die Bekämpfung durch ein DIRCM-System bzw. dessen Module erfolgt. Das Ziel wird dabei von einem ersten DIRCM-Modul zu einem zweiten DIRCM-Modul übergeben. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

"Übergabe des Ziels" bedeutet, dass das Ziel anfänglich von einem ersten Modul des Systems bekämpft wird und die Bekämpfung dann von einem anderen Modul fortgesetzt werden soll, das Ziel oder die Bekämpfung wird also von Modul zu Modul übergeben oder weitergereicht. Das DIRCM-System enthält mindestens die zwei (erstes, zweites) DIRCM-Module oder -Subsysteme (im Folgenden kurz: "Module"), insbesondere drei oder mehr Module. Jedes der Module dient zum Verfolgen des Ziels (sogenanntes "tracking") und zum Bekämpfen des Ziels (sogenanntes "jamming", Bestrahlen des Ziels mit einem Laserstrahl des Moduls) in einem sogenannten Verfolgemodus. Das "tracking" bedeutet ein fortlaufendes Orten des Ziels, insbesondere ein Nachführen des o. g. IR-Suchkopfes mit dem Ziel, so dass ein zielgerichtetes Bestrahlen möglich ist. Das Bekämpfen erfolgt durch "jamming", also Bestrahlen, also das Aussenden einer Strahlung, insbesondere des o. g. Laserstrahls, der zielgerichtet in den Suchkopf des Ziels eingestrahlt wird, d. h. dass der Suchkopf bestrahlt wird. Das Modul enthält insbesondere eine Verfolgeeinheit, die das tracking bewerkstelligt, und eine Strahleinheit, die das jamming bewerkstelligt. Die Strahleinheit enthält insbesondere einen Störlaser zur Bestrahlung des Ziels. Ein jeweiliges Modul bzw. deren Verfolge-/Strahleinheiten sind insbesondere in sogenannten "Turrets" untergebracht bzw. baulich konzentriert bzw. integriert.

Jedes der Module (erstes, zweites, insbesondere mehrere, insbesondere alle der Module) weisen folgende Betriebsmodi auf:
- Ein Sprungmodus dient zur Grobausrichtung eines Erfassungsbereiches des jeweiligen Moduls - also einer Such- und Verfolgungsoptik des Moduls - auf das Ziel. Dies geschieht anhand einer Einweisung von einem diesbezüglich übergeordneten System, so dass das Ziel nach der Einweisung des Moduls auf das Ziel jedenfalls im Erfassungsbereich liegt. Der Erfassungsbereich oder auch Sichtbereich ist derjenige Bereich eines Moduls, in dem Ziele bei einer bestimmten Ausrichtung des Moduls überhaupt erfasst und verfolgt und bestrahlt werden können. Ein solches übergeordnetes System ist z. B. eine zentrale Einheit des DIRCM-Systems, das für alle Module zuständig ist oder ein anderes Modul, das hierarchisch dem zu kommandierenden Modul zumindest zu diesem Zeitpunkt - sozusagen als "Master" - übergeordnet ist.
- Ein Erkennungsmodus dient zum Erkennen des Ziels im Erfassungsbereich des jeweiligen Moduls. Hier wird detektiert, ob es sich bei einem Objekt tatsächlich um ein potentielles Ziel handelt und wo sich das Ziel im Erfassungsbereich befindet.
- Ein Zentriermodus dient zum Zentrieren des erkannten Ziels im Erfassungsbereich des jeweiligen Moduls. Das Zentrum ist in der Regel der Mittelpunkt des Erfassungsbereiches. Nur ein Ziel in diesem Zentrum kann erfolgreich bestrahlt werden. Das Modul wird daher feinpositioniert (nachgeführt), um mit seinem Zentrum exakt auf das Ziel ausgerichtet zu sein. Mit anderen Worten wird das Ziel durch Ausrichten des Moduls "ins Fadenkreuz des Moduls" gebracht.
- Ein Verfolgemodus dient zum Verfolgen (tracking, halten im Zentrum des Erfassungsbereiches durch Nachführen des Moduls) und Bekämpfen (jamming) des in seinem Erfassungsbereich zentrierten Ziels. Das Ziel wird dabei stets im Zentrum gehalten, indem das Modul ggf. nachgeführt wird, um immer mit dem Zentrum auf das Ziel ausgerichtet zu bleiben.

Das Verfahren geht davon aus, dass das Ziel vom ersten Modul bereits erfolgreich verfolgt wird, also bei dem ersten Modul der Verfolgemodus für das Ziel aktiviert ist; und dass das zweite Modul für eine Bekämpfung des Ziels bereit ist. D. h., dass das zweite Modul nicht mit einer anderen Zielverfolgung beschäftigt und einsatzbereit ist.

Bei dem Verfahren werden folgende Schritte durchgeführt:
A) In einem Schritt A) sendet das erste Modul zu einem Zeitpunkt T1 ein Anforderungssignal an das zweite Modul. Das Anforderungssignal bzw. dessen Senden vom ersten und Empfangen vom zweiten Modul bedeutet, dass das erste Modul das zweite Modul auffordert, fortan das Ziel zu bekämpfen (durch Tracking und Jamming).
   Signallaufzeiten von Signalen zwischen den Modulen, Verarbeitungszeiten in den Modulen usw. werden hier vorliegend nicht betrachtet. Insbesondere sind diese verschwindend gering und vernachlässigbar oder sie sind in einer praktischen Umsetzung des Verfahrens entsprechend fachüblich zu berücksichtigen. Der Sendezeitpunkt T1 für das Anforderungssignal im ersten Modul ist also auch dessen Empfangszeitpunkt im zweiten Modul. Dies gilt auch für die weiter unten genannten anderen Signale.
B) In einem Schritt B) aktiviert das zweite Modul (12a,b) zu einem Zeitpunkt T2 seinen Sprungmodus, wenn es das Anforderungssignal empfangen hat. T2 liegt daher an oder nach dem Zeitpunkt T1. Im Sprungmodus richtet es seinen Erfassungsbereich grob auf das Ziel aus, so dass das Ziel im Ergebnis im Erfassungsbereich des zweiten Moduls liegt. Dieser Vorgang wird auch "Einschwenken des Erfassungsbereiches auf das Ziel" genannt. Die Koordinaten für die Grobausrichtung des zweiten Moduls stammen z. B. von einer den Modulen übergeordneten DIRCM-Systemkomponente oder insbesondere vom ersten Modul selbst, das ja den augenblicklichen Ort des Ziels aus seinem derzeit aktiven Tracking kennt.
C1) Eine weitere Verfahrensphase folgt zu einem Zeitpunkt T3, wenn das Ziel im Erfassungsbereich des zweiten Moduls liegt. T3 liegt daher nach dem Zeitpunkt T2. Der (die Zeitdauer T2 bis T3 dauernde) Sprungmodus im zweiten Modul wurde also erfolgreich ausgeführt. Dabei ist es unbedeutend, ob ein tatsächliches Einschwenken des zweiten Moduls nötig war, also das Ziel tatsächlich erst in den Erfassungsbereich des zweiten Moduls gelangen musste oder ob es - sozusagen zufällig - schon im Erfassungsbereich lag und diese Tatsache im Sprungmodus verifiziert wurde.
C2) In einem Schritt C2 zum Zeitpunkt T3 geht dann das zweite Modul vom Sprungmodus in den Erkennungsmodus über.
C3) Gleichzeitig, also auch zum Zeitpunkt T3, sendet das zweite Modul ein erstes Ereignissignal an das erste Modul, wo es zum Zeitpunkt T3 empfangen wird. Die Übermittlung dieses ersten Ereignissignals bedeutet, dass das zweite Modul das erste Modul über die Vornahme der Schritte C1, C2 und die damit verbundenen Bedingungen / Zustände / Umstände informiert (erfolgreiches Einschwenken, Start des Erkennungsmodus usw.). Den Zeitpunkt T3 erkennt das erste Modul am Eintreffen des ersten Ereignissignals.
D) Einen Schritt D) führt das erste Modul beim Eintreffen des ersten Ereignissignals zum Zeitpunkt T3 aus: Das erste Modul bereitet das Beenden seines Verfolgemodus vor. Hierzu wartet es ab dem Zeitpunkt T3 eine Restlaufzeit bis zu einem Zeitpunkt T5a ab. Mit Erreichen von T5a deaktiviert es seinen Verfolgemodus. Dies gilt allerdings nur für den Fall, dass bei T5a der Verfolgemodus nicht schon deaktiviert wurde, siehe hierzu unten den Zeitpunkt T5b, falls dieser vor dem Zeitpunkt T5a liegt und dort der Verfolgemodus erfolgreich beendet wurde. Die Restlaufzeit wird bei dem Verfahren so gewählt, dass diese kürzer ist als die minimale Zeitspanne, die das zweite Modul für die Durchführung des Erkennungsmodus und des Zentriermodus mindestens, also im kürzesten denkbaren aller Fälle benötigen würde. Eine zum tatsächlichen Ausschalten benötigte Zeit (siehe unten) ist dabei in die Restlaufzeit eingerechnet. Derartige Zeitspannen sind z. B. aus den Designdaten / Realdaten des DIRCM-Systems, aus Messungen, Versuchen, theoretischen Überlegungen zu Timing und Systemverhalten, Simulationen usw. zu ermitteln bzw. bekannt. Im Ergebnis erfolgt also (falls nicht schon vorher geschehen, T5b, siehe unten) spätestens zum Zeitpunkt T5a eine Deaktivierung des Verfolgemodus im ersten Modul, d. h. das Tracking und Jamming durch das erste Modul endet am Zeitpunkt T5a bzw. ist an diesem Zeitpunkt sicher beendet.
E1) Weitere Verfahrensschritte folgen zu einem Zeitpunkt T4, wenn das Ziel vom zweiten Modul erfolgreich im Erfassungsbereich erkannt, also als Ziel gefunden, wurde. T4 liegt daher nach dem Zeitpunkt T3.
E2) In einem Schritt E2) geht das zweite Modul im Zeitpunkt T4 vom Erkennungsmodus in den Zentriermodus über.
E3) Gleichzeitig, also auch im Zeitpunkt T4 sendet das zweite Modul ein zweites Ereignissignal an das erste Modul, wo es im Zeitpunkt T4 eintrifft. Das zweite Ereignissignal informiert damit das erste Modul (entsprechend wie beim ersten Signal) über die entsprechenden Umstände usw., z. B. den Übergang zum Zentriermodus, den Zeitpunkt T4 usw.
F) In einem Schritt F) beginnt das erste Modul beim Eintreffen des zweiten Ereignissignals zum Zeitpunkt T4 sofort mit der Beendigung seinen Verfolgemodus. Das Beenden benötigt dabei allerdings eine gewisse Zeitspanne, nämlich eine Ausschaltzeit Taus, beginnt im Zeitpunkt T4 und endet im Zeitpunkt T5b. Zum Zeitpunkt T5b wird also der Verfolgemodus im ersten Modul beendet, falls dies nicht schon geschehen ist, siehe oben zum Zeitpunkt T5a. Die Ausschaltzeit Taus wird so gewählt, dass sie kleiner als die minimale Zeit ist, die das zweite Modul für die Durchführung des Zentriermodus mindestens, d. h. entsprechend oben im kürzesten denkbaren Fall benötigt. Diese Zeiterfordernis ist wieder - siehe oben - aus Designvorgaben, Messungen, Theorie, Timing etc. bekannt. Alternativ (falls Taus nicht klein genug gewählt werden kann, um der Bedingung zu genügen), wird der Zentriermodus mindestens so lange behalten oder verlängert bzw. zumindest der Verfolgemodus nicht gestartet (siehe Schritt G), bis die Zeit Taus sicher abgelaufen ist, und der Zeitpunkt T5b vergangen ist. Zum Zeitpunkt T5b ist daher der Verfolgemodus im ersten Modul sicher beendet.
G) In einem Schritt G), zu einem Zeitpunkt T6, wenn das zweite Modul das Ziel erfolgreich im Erfassungsbereich zentriert hat, wechselt das zweite Modul vom Zentriermodus in den Verfolgemodus. Damit beginnt es mit dem Tracking und Jamming des Ziels.

Die Formulierungen "zu dem Zeitpunkt, wenn ... liegt / wurde / hat" oben sind wie folgt zu verstehen: Die Zeitpunkte T2, T3, T4 und T6 können jeweils direkt an dem oben angegebenen Moment gewählt werden, nämlich stets exakt dann, wenn das Anforderungssignal eben am zweiten Modul eingetroffen ist (für Zeitpunkt T2) , das Ziel gerade eben in den Erfassungsbereich gelangt ist (für Zeitpunkt T3), das Ziel gerade eben erkannt wurde (für Zeitpunkt T4) oder das Ziel gerade eben zentriert wurde (für Zeitpunkt T6). Es können jedoch alternativ auch jeweilige Zeitpunkte gewählt werden, die nach den jeweiligen Momenten liegen. Das Verfahren verlängert sich dann in gewünschter Weise.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt.

DIRCM-Systeme werden meist in Flugzeugen installiert und dienen zur Abwehr von infrarotgelenkten Flugkörpern, die entweder vom Boden (sog. Man-Pads) oder von anderen Flugzeugen (sog. Air-to-Air-Missiles) abgeschossen werden. In größeren Flugzeugen inklusive Hubschraubern wird mehr als ein DIRCM-Gerät (Modul) installiert, um einen größeren Raumwinkel abdecken und damit mehr Schutz bieten zu können. Mehrere DIRCM-Geräte (Module) bilden zumindest einen Teil eines DIRCM-Systems. Das Teil des DIRCM-Gerätes (Moduls), das den Laserstrahl steuert und aussendet, wird als "Turret" bezeichnet. Die Flugzeuge besitzen Flugkörperwarner, die die ankommende Bedrohung (Ziel) erkennen und die Koordinaten an das DIRCM-System weiterleiten. Anhand der Koordinaten berechnet das DIRCM-System den am besten positionierten Turret (Modul), der dann auf das Ziel einschwenkt, die Bedrohungsverfolgung übernimmt und den Suchkopf des anfliegenden Flugkörpers mittels Laser stört und somit den Flugkörper ablenkt. Sollte während des Bekämpfungsvorgangs der Flugkörper den Wirkungsbereich des gerade agierenden Turrets (erstes Modul) verlassen, wählt das DIRCM-System einen zweiten Turret (zweites Modul) aus, der besser positioniert ist und den Abwehrvorgang fortsetzen kann. Gemäß der Erfindung ergibt sich eine Übergabe der Bedrohung (Ziel) von einem aktuell aktiven Turret (erstes Modul) auf einen weiteren im System vorhandenen Turret (zweites Modul) in einem synchronisierten, zeitlich sequenziellen Funktionsablauf, bei dem sichergestellt wird, dass nicht beide beteiligten Turrets (Module) die gleiche Bedrohung gleichzeitig verfolgen (tracken und jammen).

Bei agilen Begegnungssituationen zwischen einem (durch das DIRCM-System zu schützenden) Flugzeug und einem anfliegenden Flugkörper (Ziel) kann es geschehen, dass die Bekämpfung der Bedrohung (Ziel) von einem Turret (erstes Modul) auf den nächsten (anderes, zweites Modul) notwendig wird, weil sich das Ziel aus dem Wirkbereich des ersten Turrets (Moduls) bewegt. Das DIRCM-System entscheidet über den Wechsel von einem Turret zum nächsten. Wird eine Übergabe notwendig, schwenkt der neu ausgewählte (zweite) Turret auf die ankommende Bedrohung ein bzw. zielt auf diese. Das Einschwenken / Zielen des Turrets geschieht in vier Phasen:
- Schwenken eines richtbaren optischen Systems (Teil des Moduls/Turrets) in Richtung der gemeldeten Position der Bedrohung ("Jump"), und damit Ausrichtung des Erfassungsbereiches des Moduls auf das Ziel,
- Erkennung der Bedrohung im Sichtfeld (Erfassungsbereich) der Such- und Verfolgungsoptik, also des o. g. optischen Systems ("Acquire"),
- Vorbereitung der Bedrohungsverfolgung durch Zentrierung der Bedrohung (Ziel) in der Bildmitte der Suche- und Verfolgungsoptik, also in der Mitte des Erfassungsbereiches, also "im Fadenkreuz" ("Centering"),
- Verfolgung (Tracking) der Bedrohung mit gleichzeitiger Bestrahlung (Jamming) der Bedrohung mit dem Lasersignal (Teil des Moduls / Turrets).

Im erfindungsgemäßen Verfahren beendet der aktuell aktive erste Turret (Modul) durch einen systeminternen Synchronisationsvorgang (zwischen den beiden Modulen) seine Zielverfolgung (Tracking) und - Beleuchtung (Jamming) vor dem Beginn der Zielverfolgung (Tracking und Jamming) durch den die Bedrohung übernehmenden zweiten Turret (Modul).

Gemäß der Erfindung werden zwei Zeitpunkte T5a und T5b bzw. Kriterien (T3+LR und T4+Taus) geschaffen, an denen der Verfolgemodus des ersten Moduls deaktiviert wird, bevor der Verfolgemodus am zweiten Modul zum späteren Zeitpunkt T6 aktiviert wird. So kann eine zeitliche Überlappung des Tracking und Jamming zwischen beiden Modulen sicher verhindert werden. Selbst wenn eines der beiden Kriterien ausfällt, zum Beispiel aufgrund fehlerhafter oder Nicht-Übermittlung des ersten oder zweiten Ereignissignals, findet immer noch eine sichere Abschaltung des ersten Moduls aufgrund des anderen Kriteriums (T5a oder T5b) statt.

Die Zeitwerte für die Restlaufzeit und die Ausschaltzeit werden im DIRCM-System bzw. den Modulen fest hinterlegt bzw. eingestellt, z. B. in dessen Betriebssoftware.

Durch die Dimensionierung der Restlaufzeit und der Ausschaltzeit bzw. der Dauer des Zentriermodus / ggf. Warten mit Übergang vom Zentriermodus zum Verfolgemodus im zweiten Modul ist ebenfalls die Überlappungsfreiheit für den Verfolgemodus bei beiden Modulen sichergestellt.

Solange die jeweilige Übermittlung wenigstens eines der Ereignissignale sichergestellt ist bzw. erfolgreich ist, erfolgt die sichere Abschaltung des Verfolgemodus im ersten Modul autark und unabhängig vom zweiten Modul oder einem übergeordneten Steuersystem, da nur interne Prozesse im ersten Modul (Restlaufzeit, Ausschaltzeit) und sicheres Wissen über das zweite Modul (Dauer von Erkennungs- / Zentriermodus) genutzt werden.

Mit dem erfindungsgemäßen Verfahren wird die Bedrohung, also das Ziel, nicht von einem Modul (Turret) auf das andere übergeben, während beide Module gleichzeitig das Ziel verfolgen (tracken und ggf. auch jammen). Stattdessen werden systeminterne Mode-Übergänge (die Moden sind: Sprung-, Erkennungs-, Zentrier-, Verfolgemodus) und Zeit-Informationen (T3, T4, Restlaufzeit, Ausschaltzeit, bekannte Minimaldauern der Moden) genutzt, um die Zielverfolgung und die Laser Emission des aktuell aktiven (ersten) Moduls sicher zu beenden, bevor das das Ziel übernehmende (zweite) Modul mit der Zielverfolgung (Verfolgemodus) beginnt.

Erfindungsgemäß tracken und jammen im hier beschriebenen Verfahren also die beiden beteiligten (erstes und zweites) Module während der Übergabe vom ersten zum zweiten Modul das gleiche Ziel nicht gleichzeitig. Der Übergabevorgang wird also nicht durch zeitlich gleichzeitig auf den beiden beteiligten Modulen verlaufende Funktionsabläufe realisiert, sondern wird im Kontext des hier beschriebenen Vorgehens durch eine zeitlich synchronisierte und durch systeminterne Ereignisse ausgelöste, sequenzielle Funktionskette ersetzt.

Im Folgenden wird der Ablauf der Zielübergabe von einem aktiv ein Ziel verfolgenden Wirksystem (erstes Modul) auf ein zweites Wirksystem (zweites Modul) erläutert:
"Wirksystem" (WS) bezeichnet im nachfolgenden Text jedes System, das in der Lage ist, ein ihm zugewiesenes Ziel eigenständig zu verfolgen und dieses mit einem Wirkmechanismus abzuwehren.

Im Folgenden wird ein Ablauf beschrieben, mit dem in einem zu schützenden System (zu schützendes Objekt), das mehrere Wirksysteme (Module) zu seinem Schutz beinhaltet, die Übergabe eines durch ein Wirksystem 1 (erstes Modul) verfolgten (Tracking und Jamming) Zieles auf ein anders Wirksystem 2 (zweites Modul) erfolgt. Derartige Zielübergaben werden notwendig, wenn das durch Wirksystem 1 verfolgte Ziel aufgrund von Verdeckungen durch dieses Wirksystem 1 nicht mehr beobachtet und verfolgt (Tracking / Jamming) werden kann.

Eine Ausgangssituation stellt sich wie folgt dar: Das an eine übergeordnete Struktur (z. B. zu schützendes Flugzeug) montierte Wirksystem 1 verfolgt aktiv (Tracking) ein ihm zugewiesenes Ziel und wirkt mit seinem Wirkmechanismus (Jamming) gegen das Ziel, befindet sich also im Verfolgemodus. Es gibt mindestens ein weiteres Wirksystem 2, das zum genannten Zeitpunkt nicht aktiv mit einer Bedrohungsabwehr beschäftigt ist. Folgender zeitlicher Ablauf wird dann durchgeführt:
Das aktive Wirksystem 1 erkennt, dass eine Zielverfolgung und/oder -abwehr aufgrund drohender Einschränkungen des eignen Sichtfeldes (Erfassungsbereich) nicht länger möglich ist. Aus diesem Grund fordert das aktive System (WS 1) zum Zeitpunkt T1 die Übernahme und Fortführung der Abwehrmaßnahme durch ein zweites Wirksystem WS 2 an. Hierzu sendet das erste Wirksystem WS1 im Zeitpunkt T1 ein Anforderungssignal an das zweite Wirksystem WS2.

Wirksystem WS 2 richtet sich (schwenkt seinen Erfassungsbereich) anschließend zum Zeitpunkt T2 (nach T1, insbesondere so schnell wie es systeminterne Prozesse erlauben) auf die von WS 1 übertragenen Zielkoordinaten aus (Sprungmodus von T2 bis T3) und beginnt nach Erreichen des Zielbereiches (das Ziel gelangt zum Zeitpunkt T3 in den Erfassungsbereich von WS2) mit der Zielsuche bei Zeitpunkt T3 (Erkennungsmodus ab T3). Gleichzeitig sendet Wirksystem WS 2 zu diesem Zeitpunkt ein Signal (Ereignisinformation 1) an Wirksystem WS 1. Dieses Signal nutzt Wirksystem WS 1 um ab dem Empfangszeitpunkt T3 die Beendigung des eigenen Zielverfolgungsvorganges (Verfolgemodus) vorzubereiten. Der Verfolgemodus wird spätestens zum Zeitpunkt T5a = T3 + Restlaufzeit abgeschaltet.

Nachdem Wirksystem WS 2 das Ziel im Zielbereich gefunden hat (Erkennungsmodus von T3 bis T4, da zum Zeitpunkt T4 erfolgreich), sendet es bei T4 ein weiteres Signal (Ereignisinformation 2) an Wirksystem WS 1 und beginnt mit der Zielfokussierung zum Zeitpunkt T4 (Zentriermodus ab T4).

Spätestens mit Eintreffen des Signals "Ereignisinformation 2" zum Zeitpunkt T4 beendet Wirksystem WS 1 die Zielverfolgung (dies dauert die Ausschaltzeit Taus), deaktiviert seinen Wirkmechanismus zum Zeitpunkt T5a = T4 + Taus und nimmt wieder seine Ruheposition ein.

Sobald Wirksystem WS 2 das Ziel fokussiert hat, beginnt es zum Zeitpunkt T6 mit der Zielverfolgung und -abwehr.

Dabei wird durch die Signale "Ereignisinformation 1" und "Ereignisinformation 2" sichergestellt, dass der Zeitpunkt T6 immer nach dem Zeitpunkt T5a und T5b liegt.

In einer bevorzugten Ausführungsform des Verfahrens wird als Zeitpunkt T2 der Moment gewählt, an dem das zweite Modul das Anforderungssignal gerade empfängt, und/oder als Zeitpunkt T3 der Moment gewählt, an dem das Ziel gerade in den Erfassungsbereich des zweiten Moduls eintritt oder nach Aktivierung des Erkennungsmodus zuerst in diesem liegt, und/oder als Zeitpunkt T4 der Moment gewählt, an dem das Ziel gerade erfolgreich im Erfassungsbereich erkannt wird, und/oder als Zeitpunkt T6 der Moment gewählt, an dem das Ziel gerade erfolgreich im Erfassungsbereich zentriert wird.

Die Zeitpunkte T2, T3, T4 und T6 werden also zum jeweils frühestmöglichen Zeitpunkt bzw. Moment gewählt, in dem die entsprechend genannte Bedingung erfüllt ist. Somit wird der Wechsel vom ersten auf das zweite Modul möglichst schnell ausgeführt.

In einer bevorzugten Ausführungsform des Verfahrens wird als Zeitpunkt T6 der Moment gewählt, an dem nach dem Zeitpunkt T4 die Ausschaltzeit Taus gerade abgelaufen ist. Damit ist sichergestellt, dass im Zeitpunkt T6 der Zeitpunkt T5b sicher vergangen ist und das erste Modul seinen Verfolgemodus sicher beendet hat.

In einer bevorzugten Ausführungsform des Verfahrens wird vor Schritt A) das zweite Modul von einem übergeordneten System aus den im System verfügbaren Modulen ausgewählt. Dies schließt sowohl die Feststellung, dass eine Übergabe überhaupt erfolgen soll, und/oder auch die Auswahl eines speziellen der verfügbaren Module als zweites Modul ein. Kriterium für eine günstige oder nötige Übergabe ist zum Beispiel eine bestehende oder drohende Einschränkung des eigenen Sichtfeldes des ersten Moduls. Das erste Modul ist somit von einer entsprechenden Entscheidungs-/ Auswahlaufgabe enthoben. Die Systemeffizienz kann so gesteigert werden. Ein übergeordnetes System ist zum Beispiel eine zentrale Steuer- und Auswerteeinheit des DIRCM-Systems zur Koordinierung der verschiedenen Module oder ein dem Modul im entsprechenden Moment zumindest diesbezüglich übergeordnetes anderes Modul.

In einer bevorzugten Ausführungsform arbeiten erstes und zweites Modul hinsichtlich der Übergabe (vom ersten zum zweiten Modul), abgesehen vom Austausch des Anforderungssignals und des ersten und zweiten Ereignissignals, für sich autark. Solange diese Signale ungestört bzw. fehlerfrei ausgetauscht werden können, stehen sonstige Störungen der Kommunikation zwischen den beiden Modulen der reibungslosen Ausführung des erfindungsgemäßen Verfahrens nicht entgegen, da eine solche ansonsten nicht benötigt wird. Die Fehlersicherheit des Verfahrens bzw. eines entsprechenden DIRCM-Systems hinsichtlich überlappungsfreier Verfolgemodi zwischen erstem und zweitem Modul wird dadurch erhöht.

In einer bevorzugten Ausführungsform erkennt vor Schritt A) das erste Modul selbständig, dass eine Übergabe an das zweite Modul günstig und/oder nötig ist. Dies stellt ein alternatives Vorgehen zur oben genannten Feststellung und/oder Auswahl durch ein übergeordnetes System dar. Somit wird auch der Feststellungs- und/oder Auswahlschritt autark von den Modulen, hier dem ersten Modul durchgeführt. Damit wird ein übergeordnetes System auch von dieser Aufgabe entlastet.

In einer bevorzugten Ausführungsform des Verfahrens nimmt am oder nach dem früheren der Zeitpunkte T5a oder T5b, wenn also das erste Modul seinen Verfolgemodus beendet hat, das erste Modul eine Ruheposition ein. Eine solche Ruheposition ist insbesondere eine Mittel- oder Neutralposition des Moduls, in dem es nach allen Bewegungsseiten bzw. -freiheitsgraden gleichen Bewegungsspielraum hat. Das Modul ist dann für einen nächsten Einsatz optimal vorbereitet. Das sofortige Verschwenken in die Ruheposition ("am ... Zeitpunkt") stellt die schnellste Variante dar, so dass das erste Modul schnell wieder einsatzbereit ist.

Die Aufgabe der Erfindung wird auch gelöst durch ein DIRCM-System gemäß Patentanspruch 8. Dieses enthält mindestens zwei DIRCM-Module, wobei jedes der Module aufweist:
- einen Sprungmodus zur Grobausrichtung seines Erfassungsbereiches auf das Ziel,
- einen Erkennungsmodus zum Erkennen des Ziels in seinem Erfassungsbereich,
- einen Zentriermodus zum Zentrieren des erkannten Ziels in seinem Erfassungsbereich, und
- einen Verfolgemodus zum Verfolgen und Bekämpfen des in seinem Erfassungsbereich zentrierten Ziels.

Das DIRCM-System enthält auch eine Steuer- und Auswerteeinheit. Das DIRCM-System einschließlich der Steuer- und Auswerteeinheit ist zur Ausführung des erfindungsgemäßen Verfahrens eingerichtet bzw. angepasst bzw. konfiguriert. "Eingerichtet" / "Angepasst" / "Konfiguriert" ist dabei so zu verstehen, dass das DIRCM-System einschließlich der Steuer- und Auswerteeinheit nicht nur für die Durchführung der relevanten Schritte/Funktionen geeignet ist, sondern vielmehr eigens dafür konzipiert wurde. Das DIRCM-System einschließlich der Steuer- und Auswerteeinheit ist insbesondere durch Programmierung der darin enthaltenen Recheneinrichtungen und/oder Festverdrahtung entsprechend "eingerichtet".

Das DIRCM-System und zumindest ein Teil dessen Ausführungsformen sowie die jeweiligen Vorteile wurden sinngemäß bereits im Zusammenhang mit dem erfindungsgemäßen Verfahren erläutert.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: ein Zeitdiagramm zur Veranschaulichung des Ablaufs eines Übergabeverfahrens,
- Figur 2: ein zu schützendes Flugzeug bei der Anwendung des Verfahrens,
- Figur 3: Erfassungsbereiche zweier Module in einem Sprungmodus,
- Figur 4: die Erfassungsbereiche aus Figur 3 beim Übergang in einen Erkennungsmodus.

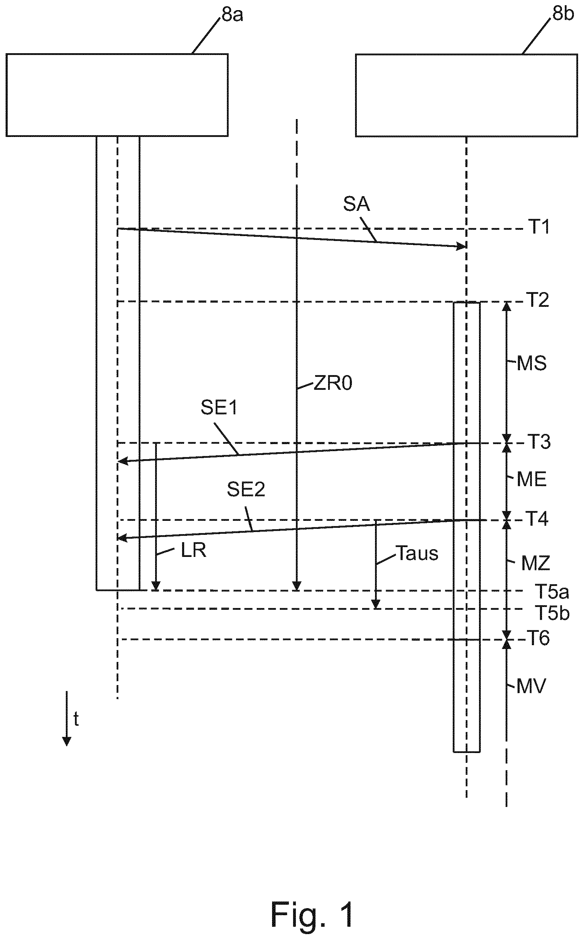

Figur 1 zeigt, symbolisch aufgetragen über der Zeit t, den Ablauf eines Verfahrens zur Übergabe eines anfliegenden Ziels 2 während dessen Bekämpfung durch ein DIRCM-System 4.

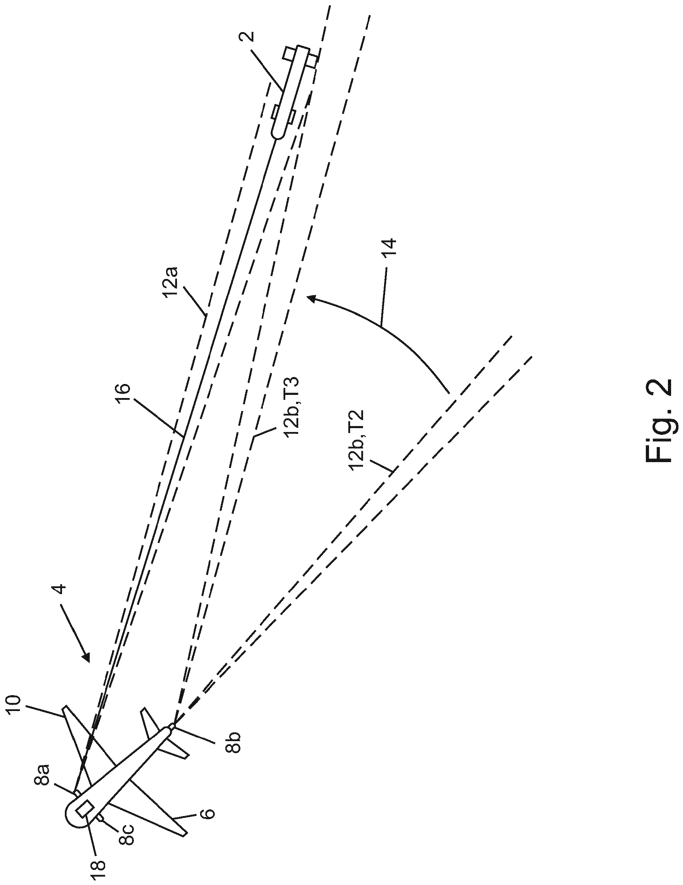

Figur 2 zeigt die entsprechende Situation hierzu: Das Ziel 2, hier eine feindliche Rakete, befindet sich im Anflug auf ein zu schützendes Objekt 6, hier ein Flugzeug. Zum Schutz gegen derartige Ziele 2 ist das Flugzeug mit dem DIRCM-System 4 ausgerüstet, welches im Beispiel drei DIRCM-Module 8a-c aufweist, deren Turrets symbolisch vorspringend am Flugzeug dargestellt sind.

Die Figuren 1 und 2 gehen aus bzw. zeigen eine Situation, in welcher das Ziel 2 bereits vom System 4 erkannt und geortet wurde und die Bekämpfung des Ziels vermittels Tracking und Jamming bereits durch das Modul 8a während eines Zeitraumes ZR0 im Gange ist und noch andauert. Es erfolgt also eine Zielverfolgung und Laserbeleuchtung durch das Modul 8a. Hierzu befindet sich das Modul 8a in einem Verfolgemodus MV (Ausführung von Tracking und Jamming gegen das Ziel 2). Die beiden Module 8b,c sind in einem Ruhemodus und einsatzbereit.

Derzeit bewegt sich das Ziel 2 relativ zum Objekt 6 derart, dass eine Abschattung des Ziels 2 bezüglich des Moduls 8a durch eine Tragfläche 10 des Flugzeuges droht. Somit wird eine Übergabe des Ziels 2 bzw. von dessen Bekämpfung vom hier ersten Modul 8a auf das zweite Modul 8b notwendig. Die Feststellung, dass eine Abschattung droht und die Auswahl des in Zukunft günstig für eine weitere Bekämpfung erscheinenden Moduls 8b erfolgt hierbei vom DIRCM-System 4 zentral in einer zentralen Steuer- und Auswerteeinheit 18 (Zentralrechner) aufgrund der Relativlage des Ziels 2 zum Objekt 6, der bekannten Geometrie des Flugzeugs und der Verteilung der Turrets an diesem, der prognostizierten Bewegung des Ziels 2 usw. Alternativ können eine oder beide Entscheidungen (Feststellung / Auswahl) auch vom Modul 8a getroffen werden.

Zum Zeitpunkt T1 sendet das Modul 8a ein Anforderungssignal SA an das Modul 8b zur Zielübergabe. In Figur 1 ist eine Zeitdifferenz zwischen aussenden und empfangen des Signals lediglich zur Verdeutlichung der Signalrichtung dargestellt. Es soll jedoch für alle Signale eine ideale Übertragungszeit von null vereinfachend angenommen werden. Das Anforderungssignal SA wird also zum Zeitpunkt T1 gesendet und empfangen. Nach dem Empfang des Anforderungssignals SA startet das Modul 8B (nach einer nicht näher erläuterten schnellstmöglichen systembedingten Initialisierungszeit, die von T1 bis T2 dauert) seinen Sprungmodus MS (ausgehend vom Ruhemodus) zum Zeitpunkt T2.

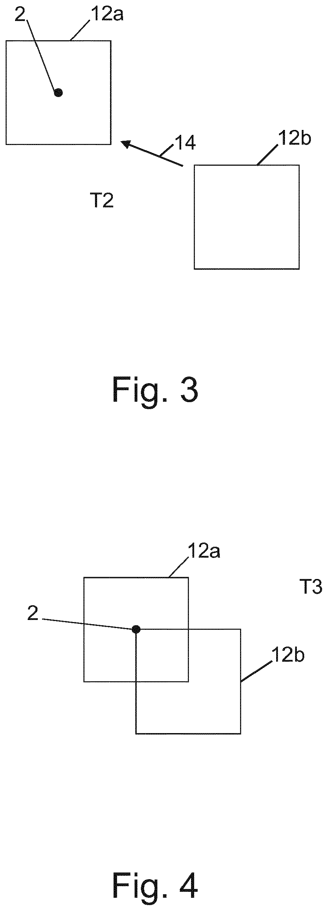

Jedem der Module 8a-c ist ein Erfassungsbereich 12a-c zugeordnet. Nur innerhalb dieses Erfassungsbereiches 12a-c ist eine Zielsuche, Ziel-Fokussierung, Tracking und Jamming des Ziels möglich. Der Erfassungsbereich 12a-c ist für jedes Modul 8a-c individuell relativ zum Flugzeug verschwenkbar. Zum Zeitpunkt T1 befindet sich der Erfassungsbereich 12b des zweiten Moduls 8b in einer Neutralposition entgegen der Flugrichtung des Flugzeuges. Zum Zeitpunkt T2 mit Start des Sprungmodus MS wird der Erfassungsbereich 12b, angedeutet in Figs. 2 und 3 durch einen Pfeil 14 auf das Ziel 2 hin eingeschwenkt, sodass dieses in den Erfassungsbereich 12b gelangt.

Figur 3 zeigt die beiden Sichtfelder bzw. Erfassungsbereiche 12a,b der Turrets bzw. Module 8a,b zum Zeitpunkt T2 und nachfolgend während dieses Einschwenkens (Pfeil 14). Im Zeitpunkt T2 hat das erste Modul 8a hat das Ziel 2 erfasst und im Zentrum des Erfassungsbereiches 12a ("Fadenkreuz") fokussiert, verfolgt es (Tracking) und stört es (Jamming) mit seinem Laserstrahl 16. Das zweite Modul 12b schwenkt ab dem Zeitpunkt T2 (Pfeil 14) in Richtung auf das Ziel 2 hin ein. Modul 8b richtet sich also auf den Zielbereich (Bereich, in dem sich das Ziel 2 befindet) aus.

Figur 4 zeigt folgende Situation: Zum Zeitpunkt T3 ist Erfassungsbereich 12b entlang des Pfeils 14 so weit auf das Ziel 2 hin eingeschwenkt, dass dieses in den Erfassungsbereich 12b eintritt. Figur 2 zeigt ebenfalls diese Situation, hier gestrichelt. Der Sucher des zweiten Moduls 8b hat das Ziel 2 beim Schwenken in Richtung des Pfeils 14 im Zeitpunkt T3 soeben erreicht.

Das zweite Modul 8b schaltet daher im Zeitpunkt T3 vom Sprungmodus MS in den Erkennungsmodus ME. Über einen Suchmodus in der Bildverarbeitung wird das Ziel 2 im Erkennungsmodus ME erfasst. Mit anderen Worten erfolgt eine Zielsuche durch Modul 8b. In der Phase ab dem Zeitpunkt T3, also zwischen der Zielerfassung (Erkennungsmodus ME und Zentriermodus MZ) und dem Beginn der Zielverfolgung (Beginn des Verfolgemodus MV) durch Modul 8b zum Zeitpunkt T6 beendet Modul 8a seine Zielverfolgung und Beleuchtung (Verfolgemodus MV) an einem Zeitpunkt T5a oder T5b, so dass dann nur noch Modul 8b das Ziel 2 verfolgt (Tracking) und mit seinem Leser stört (Jamming), sich also im Verfolgemodus MV befindet. Dies geschieht wie folgt:
Zum Zeitpunkt T3 geht das zweite Modul 8b vom Sprungmodus MS in den Erkennungsmodus ME über. Gleichzeitig sendet das Modul 8b im Zeitpunkt T3 ein erstes Ereignissignal SE1 an das erste Modul 8a, um dieses über die Tatsache zu informieren, dass das Ziel 2 nun im Erfassungsbereich 12b angelangt ist.

Das Modul 8a beginnt daraufhin im Moment des Empfangs des Ereignissignals SE1 (vereinfachend bei T3, s.o.) mit dem Herunterzählen eine Restlaufzeit LR. Nach Ablauf der Restlaufzeit LR, also zum Zeitpunkt T5a = T3 + LR beendet das Modul 8a spätestens (falls nicht zum früheren Zeitpunkt T5b geschehen, s.u.) seinen Verfolgemodus MV, d. h. beendet die Bekämpfung des Ziels 2 durch Abschalten des Trackings und Jammings.

Die Restlaufzeit LR ist dabei nach Designvorgaben bzw. konkreten Eigenschaften des DIRCM-Systems 4 so gewählt, dass sie der minimalen Zeit entspricht, die das Modul 8b in allen denkbaren Fällen für alle denkbaren Ziele 2 mindestens für die Durchführung des Erkennungsmodus EM und Zentriermodus MZ benötigt. Die Restlaufzeit LR stellt somit sicher, dass das Modul 8b vor deren Ablauf keinesfalls in den Verfolgemodus MV gelangen kann. Während der Restlaufzeit LR bereitet Modul 8a also die Beendigung seines Verfolgemodus MV vor.

Zu einem Zeitpunkt T4 hat das Modul 8b den Erkennungsmodus ME erfolgreich beendet und das Ziel 2 erkannt und geht daher in den Zentriermodus ZM über. Mit anderen Worten wird also die Zielfokussierung durch Modul 8b gestartet. Gleichzeitig, also auch im Zeitpunkt T4 sendet das Modul 8B ein zweites Ereignissignal SE2 an das Modul 8a, um über diese Situation zu informieren (Beginn des Zentriermodus MZ, Erkennungsmodus ME erfolgreich).

Mit Empfang des zweiten Ereignissignals SE2 (verzögerungsfrei im Zeitpunkt T4, s.o.), beendet das Modul 8a den Verfolgemodus MV. Diese Beendigung nimmt jedoch auch eine gewisse Ausschaltzeit Taus bis zum Zeitpunkt T5b = T4 + Taus in Anspruch. Durch Systemvorgaben im DIRCM-System 4 ist sichergestellt, dass die Ausschaltzeit Taus jedenfalls kleiner ist als jede denkbare Dauer des Zentriermodus MZ, die das Modul 8b zur Zentrierung des Erfassungsbereiches 12b auf das Ziel 2 benötigt, um schlussendlich zu einem Zeitpunkt T6 den Verfolgemodus MV und damit die Bekämpfung des Ziels 2 starten zu können.

Somit ist auch seitens der Ablaufkette T4 -> SE2 -> T4 - >Taus -> T5b sichergestellt, dass der Zeitpunkt T5b, an dem das Modul 6a seinen Verfolgemodus MV beendet, vor dem Zeitpunkt T6 liegt, an dem das Modul 6B seinen Verfolgemodus MV beginnt.

Die Beendigung der Zielverfolgung durch Modul 8a erfolgt also zum Zeitpunkt T5a oder T5b. Ob die tatsächliche Abschaltung von Tracking und Jamming des Moduls 8a (Beenden des Verfolgemodus MV) nun zum Zeitpunkt T5a oder T5b erfolgt, hängt von der jeweiligen Einsatzsituation ab. Sichergestellt bleibt jedenfalls, dass diese beiden Zeitpunkte vor dem Zeitpunkt T6 (Beginn des Verfolgemodus MV im Modul 8b) liegen. Ein Doppel-Tracking und/oder Doppel-Jamming des Ziels 2 durch beide Module 8a,b ist damit ausgeschlossen. Dies gilt selbst für den Fall, dass eines der Ereignissignale SE1,2 aufgrund welcher Fehler auch immer nicht erzeugt, nicht übertragen oder nicht empfangen wird.

Ab dem Zeitpunkt T6 übernimmt also Modul 8b die Zielverfolgung (Tracking und Jamming).

### Bezugszeichenliste

- 2: Ziel
- 4: DIRCM-System
- 6: Objekt
- 8a-c: DIRCM-Modul
- 10: Tragfläche
- 12a-c: Erfassungsbereich
- 14: Pfeil
- 16: Laserstrahl
- 18: Steuer- und Auswerteeinheit

- t: Zeit
- ZR0: Zeitraum
- MS: Sprungmodus
- ME: Erkennungsmodus
- MZ: Zentriermodus
- MV: Verfolgemodus
- LR: Restlaufzeit.
- SA: Anforderungssignal
- SE1,2: Ereignissignal
- Taus: Ausschaltzeit
- T1-6: Zeitpunkt

## Patentansprüche

1. Verfahren zur Übergabe eines anfliegenden Ziels (2) während dessen Bekämpfung durch ein DIRCM-System (4) von einem ersten DIRCM-Modul (8a) zu einem zweiten DIRCM-Modul (8b),
wobei das DIRCM-System (4) mindestens die zwei DIRCM-Module (8a-c) enthält und jedes der DIRCM-Module (8a-c) aufweist:
- einen Sprungmodus (MS) zur Grobausrichtung seines Erfassungsbereiches (12a-c) auf das Ziel (2),
- einen Erkennungsmodus (ME) zum Erkennen des Ziels (2) in seinem Erfassungsbereich (12a-c),
- einen Zentriermodus (MZ) zum Zentrieren des erkannten Ziels (2) in seinem Erfassungsbereich (12a-c), und
- einen Verfolgemodus (MV) zum Verfolgen und Bekämpfen des in seinem Erfassungsbereich (12a-c) zentrierten Ziels (2),
wobei bei dem ersten DIRCM-Modul (8a) der Verfolgemodus (MV) für das Ziel (2) aktiviert ist, und das zweite DIRCM-Modul (8b) für eine Bekämpfung des Ziels (2) bereit ist,
bei dem:
A) das erste DIRCM-Modul (8a) zu einem Zeitpunkt T1 ein Anforderungssignal (SA) an das zweite DIRCM-Modul (8b) sendet, um von diesem die Übernahme des Ziels (2) anzufordern,
B) das zweite DIRCM-Modul (8b) zu einem Zeitpunkt T2, wenn es das Anforderungssignal (SA) empfangen hat, den Sprungmodus (MS) aktiviert,
C1) zu einem Zeitpunkt T3, wenn das Ziel (2) im Erfassungsbereich (12b) des zweiten DIRCM-Moduls (8b) liegt,
C2) das zweite DIRCM-Modul (8b) vom Sprungmodus (MS) in den Erkennungsmodus (ME) übergeht, und
C2) gleichzeitig ein erstes Ereignissignal (SE1) an das erste DIRCM-Modul (8a) sendet,
D) das erste DIRCM-Modul (8a) beim Eintreffen des ersten Ereignissignals (SE1) zum Zeitpunkt T3 das Beenden seines Verfolgemodus (MV) vorbereitet, indem es seinen Verfolgemodus (MV) zu einem Zeitpunkt T5a nach Ablauf einer Restlaufzeit (LR) nach dem Zeitpunkt T3 deaktiviert, wobei die Restlaufzeit (LR) so gewählt wird, dass sie kürzer als die minimale Zeitspanne ist, die das zweite DIRCM-Modul (8b) für die Durchführung des Erkennungsmodus (ME) und des Zentriermodus (MZ) mindestens benötigt,
E1) zu einem Zeitpunkt T4, wenn das Ziel (2) vom zweiten DIRCM-Modul (8b) erfolgreich in dessen Erfassungsbereich (12b) erkannt wurde,
E2) das zweite DIRCM-Modul (8b) in den Zentriermodus (MZ) übergeht, und
E3) gleichzeitig ein zweites Ereignissignal (SE1) an das erste DIRCM-Modul (8a) sendet,
F) das erste DIRCM-Modul (8a) beim Eintreffen des zweiten Ereignissignals (SE1) zum Zeitpunkt T4 sofort mit der Beendigung seinen Verfolgemodus (MV) beginnt, was eine Ausschaltzeit (Taus) bis zum Zeitpunkt T5b erfordert, die kleiner als die minimale Zeit gewählt wird, die das zweite DIRCM-Modul (8b) für die Durchführung des Zentriermodus (MZ) mindestens benötigt,
G) zu einem Zeitpunkt T6, wenn das zweite DIRCM-Modul (8b) das Ziel (2) erfolgreich im Erfassungsbereich (12b) zentriert hat, es vom Zentriermodus (MZ) in den Verfolgemodus (MV) wechselt.

2. Verfahren nach Anspruch 1,
**dadurch gekennzeichnet, dass**
- als Zeitpunkt T2 der Moment gewählt wird, an dem das zweite DIRCM-Modul (8b) das Anforderungssignal (SA) gerade empfängt, und/oder
- als Zeitpunkt T3 der Moment gewählt wird, an dem das Ziel (2) gerade in den Erfassungsbereich (12b) des zweiten DIRCM-Moduls (8b) eintritt oder zuerst in diesem liegt, und/oder
- als Zeitpunkt T4 der Moment gewählt wird, an dem das Ziel (2) gerade erfolgreich im Erfassungsbereich (12b) des zweiten DIRCM-Moduls (8b) erkannt wird, und/oder
- als Zeitpunkt T6 der Moment gewählt wird, an dem das Ziel (2) gerade erfolgreich im Erfassungsbereich (12b) des zweiten DIRCM-Moduls (8b) zentriert wird.

3. Verfahren nach einem der vorhergehenden Ansprüche,
**dadurch gekennzeichnet,**
**dass** als Zeitpunkt T6 der Moment gewählt wird, an dem nach dem Zeitpunkt T4 die Ausschaltzeit (Taus) gerade abgelaufen ist.

4. Verfahren nach einem der vorhergehenden Ansprüche,
**dadurch gekennzeichnet,**
**dass** vor Schritt A) das zweite DIRCM-Modul (8b) von einem übergeordneten System (18) aus den im System verfügbaren DIRCM-Modulen (8a-c) ausgewählt wird.

5. Verfahren nach einem der vorhergehenden Ansprüche,
**dadurch gekennzeichnet,**
**dass** erstes (8a) und zweites DIRCM-Modul (8b) hinsichtlich der Übergabe abgesehen vom Austausch des Anforderungssignals (SA) und des ersten (SE1) und zweiten Ereignissignals (SE2) für sich autark arbeiten.

6. Verfahren nach einem der vorhergehenden Ansprüche,
**dadurch gekennzeichnet,**
**dass** vor Schritt A) das erste DIRCM-Modul (8a) selbständig erkennt, dass eine Übergabe an das zweite DIRCM-Modul (8b) günstig und/oder nötig ist.

7. Verfahren nach einem der vorhergehenden Ansprüche,
**dadurch gekennzeichnet,**
**dass** am oder nach dem Zeitpunkt T5a oder T5b das erste DIRCM-Modul (8a) eine Ruheposition einnimmt.

8. DIRCM-System (4), mit mindestens zwei DIRCM-Modulen (8a-c),
wobei jedes der DIRCM-Module (8a-c) aufweist:
- einen Sprungmodus (MS) zur Grobausrichtung seines Erfassungsbereiches (12a-c) auf das Ziel (2),
- einen Erkennungsmodus (ME) zum Erkennen des Ziels (2) in seinem Erfassungsbereich (12a-c),
- einen Zentriermodus (MZ) zum Zentrieren des erkannten Ziels (2) in seinem Erfassungsbereich (12a-c), und
- einen Verfolgemodus (MV) zum Verfolgen und Bekämpfen des in seinem Erfassungsbereich (12a-c) zentrierten Ziels (2),
und mit einer Steuer- und Auswerteeinheit (18), wobei das DIRCM-System (4) einschließlich der Steuer- und Auswerteeinheit (18) zur Ausführung des Verfahrens nach einem der vorhergehenden Ansprüche eingerichtet ist.

## Claims

1. Method for transferring an approaching target (2) from a first DIRCM module (8a) to a second DIRCM module (8b) during its combat by a DIRCM system (4),
wherein the DIRCM system (4) contains at least the two DIRCM modules (8a-c) and each of the DIRCM modules (8a-c) has:
- a jump mode (MS) for roughly aligning its capture area (12a-c) with the target (2),
- a detection mode (ME) for detecting the target (2) in its capture area (12a-c),
- a centring mode (MZ) for centring the detected target (2) in its capture area (12a-c), and
- a tracking mode (MV) for tracking and combating the target (2) centred in its capture area (12a-c),
wherein the tracking mode (MV) is activated for the target (2) in the first DIRCM module (8a), and the second DIRCM module (8b) is ready to combat the target (2),
in which:
A) the first DIRCM module (8a) transmits a request signal (SA) to the second DIRCM module (8b) at a time T1 in order to request the takeover of the target (2) from the second DIRCM module (8b),
B) the second DIRCM module (8b) activates the jump mode (MS) at a time T2 at which it received the request signal (SA),
C1) at a time T3 at which the target (2) is in the capture area (12b) of the second DIRCM module (8b),
C2) the second DIRCM module (8b) changes from the jump mode (MS) to the detection mode (ME) and
C2) simultaneously transmits a first event signal (SE1) to the first DIRCM module (8a),
D) when the first event signal (SE1) arrives at the time T3, the first DIRCM module (8a) prepares for the termination of its tracking mode (MV) by deactivating its tracking mode (MV) at a time T5a after expiry of a remaining time (LR) after the time T3, wherein the remaining time (LR) is selected such that it is shorter than the minimum period of time at least needed by the second DIRCM module (8b) to carry out the detection mode (ME) and the centring mode (MZ),
E1) at a time T4 at which the target (2) was successfully detected by the second DIRCM module (8b) in its capture area (12b),
E2) the second DIRCM module (8b) changes to the centring mode (MZ) and
E3) simultaneously transmits a second event signal (SE1) to the first DIRCM module (8a),
F) when the second event signal (SE1) arrives at the time T4, the first DIRCM module (8a) immediately begins to terminate its tracking mode (MV), which requires a switch-off time (Taus) until the time T5b, which is selected to be shorter than the minimum time at least needed by the second DIRCM module (8b) to carry out the centring mode (MZ),
G) at a time T6 at which the second DIRCM module (8b) has successfully centred the target (2) in the capture area (12b), it changes from the centring mode (MZ) to the tracking mode (MV).

2. Method according to Claim 1,
**characterized in that**
- the time T2 is selected to be the moment at which the second DIRCM module (8b) just receives the request signal (SA), and/or
- the time T3 is selected to be the moment at which the target (2) just enters the capture area (12b) of the second DIRCM module (8b) or is first in said area, and/or
- the time T4 is selected to be the moment at which the target (2) is just successfully detected in the capture area (12b) of the second DIRCM module (8b), and/or
- the time T6 is selected to be the moment at which the target (2) is just successfully centred in the capture area (12b) of the second DIRCM module (8b).

3. Method according to one of the preceding claims, **characterized**
**in that** the time T6 is selected to be the moment at which the switch-off time (Taus) has just expired after the time T4.

4. Method according to one of the preceding claims, **Characterized**
**in that**, before step A), the second DIRCM module (8b) is selected by a superordinate system (18) from the DIRCM modules (8a-c) available in the system.

5. Method according to one of the preceding claims, **characterized**
**in that** the first DIRCM module (8a) and the second DIRCM module (8b) operate autonomously per se with regard to the transfer, apart from interchanging the request signal (SA) and the first event signal (SE1) and the second event signal (SE2).

6. Method according to one of the preceding claims, **Characterized**
**in that**, before step A), the first DIRCM module (8a) independently identifies that a transfer to the second DIRCM module (8b) is favourable and/or necessary.

7. Method according to one of the preceding claims, **characterized**
**in that** the first DIRCM module (8a) assumes a rest position at or after the time T5a or T5b.

8. DIRCM system (4) having at least two DIRCM modules (8a-c), wherein each of the DIRCM modules (8a-c) has:
- a jump mode (MS) for roughly aligning its capture area (12a-c) with the target (2),
- a detection mode (ME) for detecting the target (2) in its capture area (12a-c),
- a centring mode (MZ) for centring the detected target (2) in its capture area (12a-c), and
- a tracking mode (MV) for tracking and combating the target (2) centred in its capture area (12a-c),
and having a control and evaluation unit (18), wherein the DIRCM system (4), including the control and evaluation unit (18), is configured to carry out the method according to one of the preceding claims.

## Revendications

1. Procédé de transfert d'une cible (2) en approche aérienne pendant la lutte contre celle-ci par un système DIRCM (4) d'un premier module DIRCM (8a) vers un deuxième module DIRCM (8b),
le système DIRCM (4) contenant au moins deux modules DIRCM (8a-c) et chacun des modules DIRCM (8a-c) possédant :
- un mode de saut (MS) servant à une orientation grossière de sa zone d'acquisition (12a-c) sur la cible (2),
- un mode de reconnaissance (ME) servant à la reconnaissance de la cible (2) dans sa zone d'acquisition (12a-c),
- un mode de centrage (MZ) servant au centrage de la cible (2) reconnue dans sa zone d'acquisition (12a-c) et
- un mode de suivi (MV) servant au suivi de la cible (2) centrée dans sa zone d'acquisition (12a-c) et à la lutte contre celle-ci,
le mode de suivi (MV) étant activé pour la cible (2) au niveau du premier module DIRCM (8a) et le deuxième module DIRCM (8b) étant prêt pour une lutte contre la cible (2), procédé avec lequel :
A) le premier module DIRCM (8a) émet à un instant T1 un signal de demande (SA) vers le deuxième module DIRCM (8b) afin de demander de sa part la prise en charge de la cible (2),
B) le deuxième module DIRCM (8b), lorsqu'il a reçu le signal de demande (SA), active le mode de saut (MS) à un deuxième instant T2,
C1) à un troisième instant T3, lorsque la cible (2) se trouve dans la zone d'acquisition (12b) du deuxième module DIRCM (8b),
C2) le deuxième module DIRCM (8b) passe du mode de saut (MS) au mode de reconnaissance (ME) et
C2) simultanément, émet un premier signal d'événement (SE1) vers le premier module DIRCM (8a),
D) le premier module DIRCM (8a), lors de l'arrivée du premier signal d'événement (SE1) au troisième instant T3, prépare la fin de son mode de suivi (MV) en désactivant son mode de suivi (MV) à un instant T5a après écoulement d'une durée restante (LR) après l'instant T3, la durée restante (LR) étant choisie de telle sorte qu'elle est plus courte que l'intervalle de temps minimal qui est nécessaire au deuxième module DIRCM (8b) pour exécuter au moins le mode de reconnaissance (ME) et le mode de centrage (MZ),
E1) à un instant T4, lorsque le deuxième module DIRCM (8b) a réussi la reconnaissance de la cible (2) dans la zone d'acquisition (12b),
E2) le deuxième module DIRCM (8b) passe dans le mode de centrage (MZ) et
E3) émet simultanément en deuxième signal d'événement (SE1) vers le premier module DIRCM (8a),
F) le premier module DIRCM (8a), lors de l'arrivée du deuxième signal d'événement (SE1) à l'instant T4, commence immédiatement à mettre fin à son mode de suivi (MV), ce qui nécessite un temps de mise hors circuit (Taus) jusqu'à l'instant T5b, lequel est plus petit que le temps minimal qui est nécessaire au deuxième module DIRCM (8b) pour exécuter au moins le mode de centrage (MZ),
G) à un instant T6, lorsque le deuxième module DIRCM (8b) a réussi le centrage de la cible (2) dans la zone d'acquisition (12b), il passe du mode de centrage (MZ) au mode de suivi (MV).

2. Procédé selon la revendication 1,
**caractérisé en ce que**
- l'instant T2 sélectionné est le moment auquel le deuxième module DIRCM (8b) reçoit précisément le signal de demande (SA) et/ou
- l'instant T3 sélectionné est le moment auquel la cible (2) pénètre précisément dans la zone d'acquisition (12b) du deuxième module DIRCM (8b) ou se trouve initialement dans celle-ci et/ou
- l'instant T4 sélectionné est le moment auquel réussit précisément la reconnaissance de la cible (2) dans la zone d'acquisition (12b) du deuxième module DIRCM (8b) et/ou
- l'instant T6 sélectionné est le moment auquel réussit précisément le centrage de la cible (2) dans la zone d'acquisition (12b) du deuxième module DIRCM (8b).

3. Procédé selon l'une des revendications précédentes, **caractérisé en ce que**
l'instant T6 sélectionné est le moment auquel le temps de mise hors circuit (Taus) s'est précisément écoulé après l'instant T4.

4. Procédé selon l'une des revendications précédentes, **caractérisé en ce que**
avant l'étape A), le deuxième module DIRCM (8b) est sélectionné par un système de niveau supérieur (18) parmi les modules DIRCM (8a-c) disponibles dans le système.

5. Procédé selon l'une des revendications précédentes, **caractérisé en ce que**
le premier (8a) et le deuxième module DIRCM (8b) fonctionnent en toute autonomie pour ce qui concerne le transfert, à l'exception de l'échange du signal de demande (SA) et des premier (SE1) et deuxième (SE2) signaux d'événement.

6. Procédé selon l'une des revendications précédentes, **caractérisé en ce que**
avant l'étape A), le premier module DIRCM (8a) reconnaît automatiquement qu'un transfert au deuxième module DIRCM (8b) est propice et/ou nécessaire.

7. Procédé selon l'une des revendications précédentes, **caractérisé en ce que**
à ou après l'instant T5a ou T5b, le premier module DIRCM (8a) adopte une position de repos.

8. Système DIRCM (4), comprenant au moins deux modules DIRCM (8a-c), chacun des modules DIRCM (8a-c) possédant :
- un mode de saut (MS) servant à une orientation grossière de sa zone d'acquisition (12a-c) sur la cible (2),
- un mode de reconnaissance (ME) servant à la reconnaissance de la cible (2) dans sa zone d'acquisition (12a-c),
- un mode de centrage (MZ) servant au centrage de la cible (2) reconnue dans sa zone d'acquisition (12a-c) et
- un mode de suivi (MV) servant au suivi de la cible (2) centrée dans sa zone d'acquisition (12a-c) et à la lutte contre celle-ci,
et comprenant une unité de commande et d'interprétation (18), le système DIRCM (4), y compris l'unité de commande et d'interprétation (18), étant conçu pour mettre en œuvre le procédé selon l'une des revendications précédentes.
